Europäisches Patentamt

European Patent Office

Office européen des brevets

(11) Veröffentlichungsnummer: **0 306 679**

**A2**

## (12) EUROPÄISCHE PATENTANMELDUNG

(21) Anmeldenummer: **88112018.2**

(22) Anmeldetag: **26.07.88**

(51) Int. Cl.⁴: **A47J 41/02 , A47G 19/12**

(30) Priorität: **11.09.87 DE 3730540**

(43) Veröffentlichungstag der Anmeldung:
**15.03.89 Patentblatt 89/11**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Lorenz, Horst**
**Dahlerstasse 17**
**D-5650 Solingen 1(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Kanne, insbesondere Isolierkanne.**

(57) Es handelt sich um eine Kanne, insbesondere um eine Isolierkanne, zur Aufnahme von Heißgetränken, wie Kaffee, Tee od.dgl. Das Gehäuse der Kanne hat in seinem oberen Bereich eine Schnaupe. Der Füll- und Ausgießöffnung der Kanne ist ein Deckel zugeordnet, der über eine lösbare Verbindung, insbesondere über einen Bajonettverschluß, mit dem Gehäuse der Kanne verbunden werden kann. Der Deckel gibt in seiner Offenstellung zum Ausgießen nur einen Teilbereich der Füll- und Ausgießöffnung des Gehäuses der Kanne frei. Um ein gezieltes Ausgießen der Flüssigkeit aus der Kanne zu ermöglichen, weist der Deckel eine in die Füll- und Ausgießöffnung des Gehäuses der Isolierkanne eingreifende Verlängerung auf. Diese ist in Richtung zum Isolierkannenboden hin offen und hat wenigstens einen in ihrer Umfangsfläche liegenden Auslaß, der durch Drehen des Deckels aus einer Schließlage in eine in Richtung der Schnaupe weisende Öffnungslage überführbar ist. Nach einem Alternativvorschlag weist die Verlängerung des Deckels zwei diametral gegenüberliegende und vorzugsweise untereinander gleichgestaltete Auslässe auf.

FIG.1

## Kanne, insbesondere Isolierkanne

Die Erfindung bezieht sich auf eine Kanne, insbesondere Isolierkanne zur Aufnahme von Heißgetränken, wie Kaffee, Tee od.dgl., deren Gehäuse in seinem oberen Bereich eine Schnaupe aufweist und deren Füll- und Ausgießöffnung ein Deckel zugeordnet ist, der über eine lösbare Verbindung, insbesondere über einen Bajonettverschluß, mit dem Gehäuse der Kanne verbindbar ist und der in seiner Offenstellung zum Ausgießen nur einen Teilbereich der Füll- und Ausgießöffnung des Gehäuses der Kanne freigibt.

Derartige Ausführungsformen von Kannen sind in mannigfachen Ausführungsformen bekannt. Dies gilt auch für die Ausgestaltung des dazugehörigen Deckels, der aus einer Schließlage in eine Ausgießlage überführt werden kann. Dabei ist die dem Kanneninneren zugekehrte Seite des Deckels entweder eben oder leicht nach außen gewölbt gehalten. Es bildet sich daher beim Überführen des Deckels in seine Ausgießlage im Zusammenwirken mit den benachbarten Bereichen des Gehäuses der Isolierkanne ein sichelförmiger Spalt, durch den die Flüssigkeit in den Bereich der Schnaupe gelangt. Sofern es sich um im Durchmesser kleine Kannen handelt und sofern das Ausgießen der Flüssigkeit aus der Kanne langsam durchgeführt wird, ergeben sich beim Ausgießen der Flüssigkeit keine Schwierigkeiten. Dies ändert sich jedoch - wie die Praxis zeigt - ganz erheblich, wenn im Durchmesser große Kannen benutzt werden und wenn man diese dazu noch unter Vermittlung des Handgriffes stark anhebt. In diesem Falle ergibt sich nämlich kein gerichtetes Ausgießen der Flüssigkeit mehr. Vielmehr schwappt die Flüssigkeit über die Begrenzungsränder der Schnaupe und über dieser benachbarte Teile des Gehäuses.

Hier will die Erfindung Abhilfe schaffen. Ihr liegt die Aufgabe zugrunde, Kannen, insbesondere Isolierkannen, der eingangs näher gekennzeichneten Art so zu gestalten, daß das Ausgießen der Flüssigkeit gegenüber dem Bekannten verbessert wird und zwar auch dann, wenn im Durchmesser große Kannen vorliegen. Ferner soll die Herstellung des Deckels und der Kanne im Vergleich mit dem Bekannten verbessert werden. Insbesondere soll eine wirtschaftliche Herstellung dieser Teile ermöglicht werden.

Dieses Ziel ist erfindungsgemäß dadurch erreicht, daß der Deckel eine in die Füll- und Ausgießöffnung des Gehäuses der Isolierkanne eingreifende Verlängerung aufweist, die in Richtung zum Isolierkannenboden hin offen ist und wenigstens einen in ihrer Umfangsfläche liegenden Auslaß aufweist, der durch Drehen des Deckels aus einer Schließlage in eine in Richtung der Schnappe weisende Öffnungslage überführbar ist. Durch die erfindungsgemäße Gestaltung des Deckels wird das Ausgießen der Flüssigkeit aus der Kanne wesentlich verbessert. Insbesondere liegt kein sichelförmiger Spalt zwischen Teilen des Deckels und den benachbarten Bereichen des Gehäuses vor, der sich darüber hinaus noch in Abhängigkeit von dem Verdrehmaß des Deckels ändern kann. Stattdessen wird eine genau definierte Auslaßöffnung benutzt, die in Richtung der Schnaupe zeigt, so daß die Flüssigkeit, wie Kaffee oder Tee, genau in die gewollte Richtung gelenkt wird, wenn der Deckel aus seiner Schließlage in die Öffnungslage überführt wird. Eine solche, in die Füll- und Ausgießöffnung des Gehäuses der Isolierkanne eingreifende Verlängerung des Deckels läßt sich leicht bei dessen Herstellung mit erzeugen. Der Materialeinsatz ist dabei gering.

Bei der bevorzugten Ausführungsform der Erfindung weist der ebene Mittelteil der Verlängerung des Deckels an seinem Rand eine hochgezogene Wandung auf, die an wenigstens einer Stelle zur Bildung des Auslasses eine Unterbrechung aufweist. Die hochgezogene Wandung ist dabei verhältnismäßig lang bemessen, so daß sie auch in der Öffnungslage des Deckels noch tief in die Füll- und Ausgießöffnung des Gehäuses der Isolierkanne eingreift. Auf diese Weise wird mit Sicherheit gewährleistet, daß die Flüssigkeit nur durch den Auslaß austritt, der zwischen den hochgezogenen Wandungen stehenbleibt. Die Wandungsstärke des hochgezogenen Wandungsteiles kann klein gehalten werden, weil mechanische Belastungen nicht zu erwarten sind.

Es empfiehlt sich, den ebenen Mittelteil der Verlängerung im Bereich des Auslasses in eine Abschrägung übergehen zu lassen. Durch diese wird das gerichtete Ausgießen der Flüssigkeit aus der Kanne weiter verbessert.

Damit auch in dem anschließenden Bereich eine Führung der auszugießenden Flüssigkeit erfolgt, ist es zweckmäßig, an der äußeren Grundebene des Deckels im Randbereich liegend einen abgeschrägten weiteren Bereich anzuordnen, der der Abschrägung des ebenen Mittelteiles des Deckels nachgeschaltet ist. Auf diese Weise sind in Ausgießrichtung gesehen mehrere Abschrägungen hintereinandergeschaltet, die für ein sicheres, gezieltes Ausgießen der Flüssigkeit sorgen.

Dabei ist es zweckmäßig, den abgeschrägten Bereich der äußeren Grundebene durch ansteigende Endteile zu begrenzen, die in die äußere Grundebene des Deckels übergehen. Durch diese Ausgestaltung wird verhindert, daß die Flüssigkeit seitlich aus dem abgeschrägten Bereich heraustreten kann.

Für die Lösung der gestellten Aufgabe, nämlich für die Erzielung eines gerichteten Ausgießens der Flüssigkeit aus der Kanne genügt es, wenn die Verlängerung einen einzigen Auslaß aufweist. Auf der anderen Seite ist dann jedoch zu berücksichtigen, daß der Deckel in einer ganz bestimmten Weise auf das Gehäuse der Kanne aufgesetzt werden muß, nämlich so, daß - wie gewollt - beim Ausgießen der Auslaß des Deckels in Richtung der Schnaupe zeigt. Um nun die Bedienung der Kanne zu erleichtern und um die Möglichkeit zu schaffen, den Deckel in zwei unterschiedlichen, um 180° zueinander versetzten Lagen mit dem Gehäuse der Kanne verbinden zu können, wird nach einer abgewandelten Ausführungsform der Erfindung die Verlängerung des Deckels so gestaltet, daß sie zwei diametral gegenüberliegende und vorzugsweise untereinander gleichgestaltete Auslässe aufweist. Von diesen beiden wird, je nachdem wie der Deckel mit der Kanne verbunden wird, immer nur der eine wirksam und zwar derjenige, der der Schnaupe benachbart ist. Die durch den diametral gegenüberliegenden Auslaß etwa in den Mittelbereich der Verlängerung gelangende Flüssigkeit tritt dann nicht seitlich sondern durch den wirksamen Auslaß aus. Das seitliche Austreten verhindern dabei die hochgezogenen Wandungen der Verlängerung.

Es empfiehlt sich, zwischen der Unterkante der Verlängerung und der äußeren Grundebene des Deckels eine umlaufende Nut zur Unterbringung eines Dichtungsringes anzuordnen. Der Grund der Nut springt dabei gegenüber den hochgezogenen Wandungen der Verlängerung zurück. Durch die Elastizität des benutzten Dichtungsringes läßt sich dieser über die hochgezogenen Wandungen der Verlängerung ziehen, bis er unter Ausnutzung seiner Rückstellkraft in die Nut springt und an deren Grund festgelegt ist. Der Dichtungsring ist etwas breiter gehalten als die Tiefe der Nut, um somit einen Dichtungsbereich zu erzielen, der mit benachbarten Teilen des Gehäuses der Kanne zusammenwirken kann.

Es empfiehlt sich, in der äußeren Grundebene des Deckels eine vorzugsweise radial verlaufende, der Entlüftung der Kanne dienende Rinne anzuordnen. Durch diese Rinne kann beispielsweise Wasserdampf abziehen.

Grundsätzlich wäre es möglich, den erfindungsgemäßen Deckel einstückig zu gestalten. Bevorzugt wird jedoch eine zweistückige Ausführungsform. Dabei wird bevorzugt die Verlängerung an der äußeren Grundebene eines Unterteils des Deckels angeordnet, der mit einem Oberteil zur Bildung eines kompletten Deckels verbunden wird.

Um ein einfaches Zusammenfügen der beiden Deckelteile zu ermöglichen, weist der Unterteil auf seiner der Verlängerung abgekehrten Seite einen Verbindungsbereich auf, der in einen durch Leisten begrenzten Raum des Oberteils eingreift und dort durch Schweißen, insbesondere Ultraschallschweißen, festgelegt ist. Neben einer Verschweißung können aber auch andere in der Technik gebräuchliche Verbindungsmittel oder Verfahren eingesetzt werden, um die beiden Teile des Deckels zu einer Baueinheit zu vereinigen.

Bei der bevorzugten Ausführungsform der Erfindung weist der einstückige Oberteil des Deckels einen erhabenen, zugleich als Handgriff benutzbaren Mittelteil auf, an den sich eine umlaufende Hohlkehle anschließt, die in einen ansteigenden, ebenfalls umlaufenden Bereich übergeht, der in einem Rand endet. Der Mittelteil ist dabei hohl gehalten. In der Hohlkehle des Oberteils des Deckels können sich Tropfen sammeln, die beim Ausgießen an den Begrenzungsseiten der Schnaupe hängenbleiben. Nach dem Aufrichten der Kanne erfolgt dann das Zurücklaufen solcher Tropfen und das Sammeln in der Hohlkehle des Deckeloberteiles.

Zweckmäßig ist es, wenn der Rand des Oberteils bereichsweise in Rücksprünge eingreift, die an den inneren Enden von hochstehenden Seitenwänden der Schnaupe der Kanne gebildet sind.

Um eine weitere Verbesserung beim Ausgießen der Flüssigkeit aus der Kanne zu erzielen, empfiehlt es sich, die Seitenwände der Schnaupe in Richtung der Umfangsfläche der Kanne aufeinanderzulaufen zu lassen, so daß mit ihren vorderen Enden eine verhältnismäßig enge Ausgießöffnung der Schnaupe begrenzt wird. Dies bedeutet, daß die Schnaupe bei der erfindungsgemäßen Kanne in ihrem rückwärtigen Bereich wesentlich breiter gehalten ist als im Bereich der eigentlichen Ausgießöffnung. Durch die hochgezogenen Seitenwände der Schnaupe erfolgt wiederum ein gerichtetes Ausgießen der Flüssigkeit.

Nach einem weiteren Vorschlag der Erfindung ist die Füll- und Ausgießöffnung des Gehäuses der Kanne von einer umlaufenden Begrenzungswand umgeben, die in eine nach außen hin ansteigende Fläche übergeht, an deren Ende eine aufrechte Wand angeordnet ist, die auf diametral gegenüberliegenden Seiten jeweils einen den einen Teil eines Bajonettverschluß bildenden, schräg zur Horizontalen angeordneten Vorsprung aufweist. Dabei schließt sich an die aufrechte Wand eine obere Schrägfläche an, die im Bereich der Schnaupe eine Unterbrechung aufweist. Die schräg angeordneten Vorsprünge, die den einen Teil eines Bajonettverschlusses bilden, können verhältnismäßig kurz gehalten werden. Es ist also nicht erforderlich, die gesamte Innenfläche der aufrechten Wand mit einem Vorsprung zu versehen.

Der Steigungswinkel der äußeren Schrägfläche des Gehäuses ist etwa gleich dem Steigungswinkel des ansteigenden Bereiches des Oberteiles des Deckels, so daß diese in der Gebrauchslage etwa parallel zueinander verlaufen.

An der Umfangsfläche des Unterteiles des Deckels ist der zweite Teil des Bajonettverschlusses angeordnet, der jeweils aus einer Einlaßöffnung und einer sich daran anschliessenden Schrägnut besteht. Dabei ist die Einlaßöffnung etwas größer gehalten als der schräge Vorsprung an der aufrechten Wandung des Gehäuses der Kanne, so daß er mit etwas Spiel durch die Einlaßöffnung hindurchgeführt werden kann, um dann mit der Schrägnut zusammenwirken zu können.

Dabei setzt sich erfindungsgemäß die Schrägnut aus einem kürzeren, der Öffnungsstellung des Deckels zugeordneten und einem längeren Arm zusammen, wobei letzterer der Schließstellung des Deckels zugeordnet ist. Der Öffnungswinkel des Deckels beträgt etwa 41°, der Schließwinkel dagegen 72°, wobei die Winkel jeweils von einer Einsatzstelle des Deckels im Gehäuse an gerechnet werden.

Nach einem weiteren Vorschlag der Erfindung wird bei einem Gehäuse, welches in an sich bekannter Weise mit einem Handgriff versehen ist, dieser Handgriff so gestaltet, daß er aus einem oberen und einem unteren Verbinder besteht, die etwa horizontal verlaufen und zwischen denen ein vertikal angeordneter Mittelteil liegt. Dieser Mittelteil des Handgriffes ist als nach unten hin offener Hohlkörper ausgebildet. Durch die hohle Gestaltung des Mittelteils des Handgriffes wird nicht nur Material eingespart sondern die Standzeit kann bei der Herstellung klein gehalten werden. Dabei empfiehlt es sich, den Hohlraum des Mittelteiles des Handgriffes von einer unteren Öffnung in Richtung auf den oberen Verbinder sich vorzugsweise stetig verjüngen zu lassen. Dies macht sich beim Entformen vorteilhaft bemerkbar.

Nach einem weiteren Vorschlag der Erfindung ist der Hohlraum des Mittelteiles des Handgriffes durch eine schräg verlaufende, obere Abschlußwand verschlossen, die in den plattenförmigen oberen Verbinder übergeht, der seinerseits in das Gehäuse ausläuft. Auf diese Weise ist eine ergonometrische Gestaltung des Handgriffes erzielt.

In der Praxis wird vielfach eine Isolierkanne auch zur Zubereitung von Tee benutzt. Dies geschieht vielfach dadurch, daß man durch die obere Einfüll- und Ausgießöffnung des Gehäuses der Kanne einen Teebeutel einbringt, der in das im Inneren der Isolierkanne befindliche heiße Wasser eintaucht. Dabei weisen derartige Aufgießbeutel von Tee in aller Regel einen Faden auf, der bisher beim Anbringen des Deckels stört. Um hier Abhilfe zu schaffen, weist nach einem weiteren Vorschlag der Erfindung das Gehäuse der Kanne im Bereich seiner oberen Schrägfläche liegend eine Nut zur Unterbringung von Teilen des Haltefadens eines Teebeutels auf. Dabei ist es zweckmäßig, die Nut der Schnaupe gegenüberliegend und dem oberen Verbinder des Handgriffes benachbart anzuordnen und sie nach beiden Seiten hin offen zu lassen. Auf diese Weise behindert der Haltefaden das Anbringen des Deckels am Gehäuse nicht.

Auf der Zeichnung ist die Erfindung in einem Ausführungsbeispiel dargestellt und zwar zeigen:

Fig. 1 die erfindungsgemäß ausgebildete Kanne zur Aufnahme von Heißgetränken, wie Kaffee, Tee od.dgl. in Seitenansicht;

Fig. 2 im vergrößerten Maßstab und in Draufsicht den Deckel für die Kanne nach der Fig. 1,

Fig. 3 im verkleinerten Maßstab und im Schnitt den Oberteil des aus zwei Teilen zusammengesetzten Deckels,

Fig. 4 im vergrößerten Maßstab, teilweise weggeschnitten, einen Teilschnitt durch den Oberteil gemäß der Fig. 3, der Schnitt ist dabei in den Bereich IV gelegt,

Fig. 5 eine Draufsicht auf den Unterteil des Deckels,

Fig. 6 eine Seitenansicht des Unterteils des Deckels nach der Fig. 5,

Fig. 7 teilweise im Schnitt und teilweise in Ansicht den Unterteil des Deckels nach der Fig. 5,

Fig. 8 eine weitere Seitenansicht des Unterteils des Deckels, jedoch im Bezug auf die Fig. 6 um 180° gedreht,

Fig. 9 einen Querschnitt durch den Unterteil des Deckels nach der Fig. 5,

Fig. 10 einen Längsschnitt durch das Gehäuse der Kanne gemäß der Fig. 1 bei fehlendem Deckel, fehlendem Isoliereinsatz und fehlendem Boden und

Fig. 11 eine Draufsicht auf die Kanne gemäß der Fig. 10 der Zeichnung.

Es sei zunächst erwähnt, daß in den Figuren der Zeichnungen nur diejenigen Teile einer Kanne, insbesondere Isolierkanne, dargestellt sind, welche für das Verständnis der Erfindung Bedeutung haben. So fehlen insbesondere der eigentliche, die Flüssigkeit aufnehmende, im Hohlraum des Gehäuses angeordnete Behälter und der Boden des Behälters. Die in den Zeichnungen nicht dargestellten Teile können einen bekannten Aufbau haben und in bekannter Weise mit dem Gehäuse verbunden bzw. in dessen Inneren angeordnet werden.

Dem Ausführungsbeispiel ist eine generell mit 10 bezeichnete Isolierkanne zugrunde gelegt, die ein Gehäuse 58 aufweist, welches einen eingezogenen oberen Gehäusebereich 11 besitzt, an den sich eine Schnaupe bzw. ein Ausgießer 12 anschließt. Auf der der Schnaupe 12 gegenüberliegenden anderen Seite hat das Gehäuse 58 der Isolierkanne 10 einen Handgriff 16, der einstückig mit dem Gehäuse gehalten ist. Der Boden des Gehäuses 58 ist mit 59 bezeichnet. Dieser ist lösbar mit der unteren Innenwand des Gehäuses 58 verbunden. Zu diesem Zweck ist dort ein Gewinde 53 vorgesehen, in welches der mit einem Gegengewinde versehene Boden 59 eingeschraubt werden kann. Dies geschieht, nachdem vorher der nicht gezeichnete Isolierbehälter in den Unterbringungsraum 54 des Gehäuses 58 eingeschoben ist.

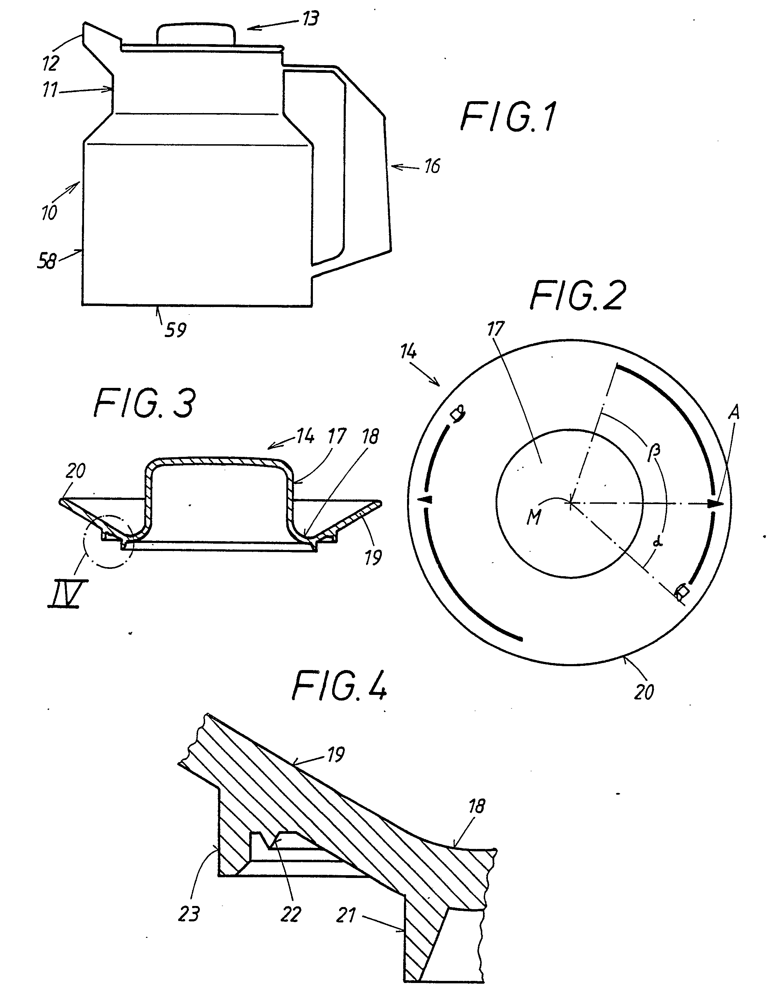

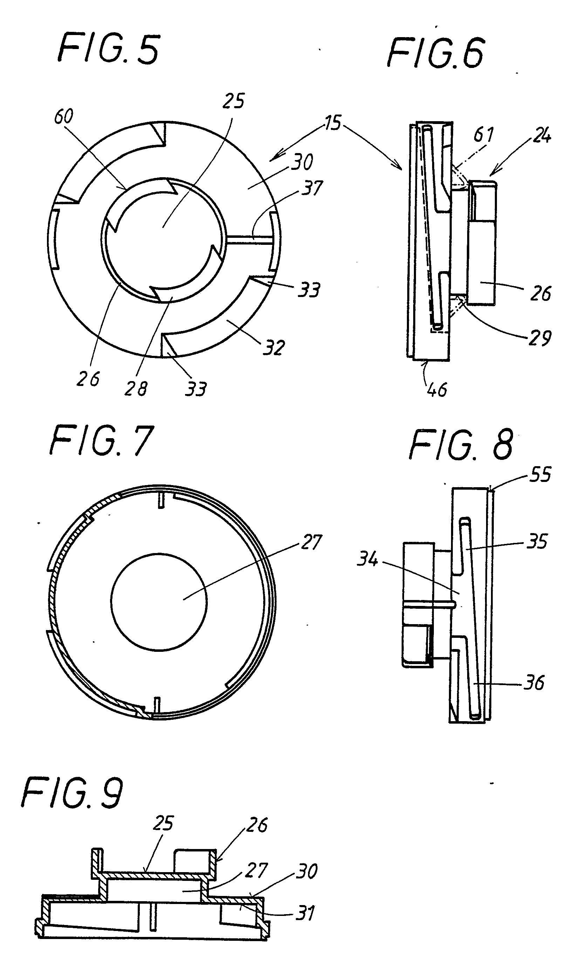

Die Füll- bzw. Ausgießöffnung 38 des Gehäuses 58 ist durch einen generell mit 13 bezeichneten Deckel verschließbar. Dieser Deckel 13 besteht aus zwei Teilen, nämlich dem Oberteil 14 und dem Unterteil 15. Der Oberteil 14 ist in den Fig. 2, 3 und 4 der Zeichnung, der Unterteil 15 dagegen in den Fig. 5 bis 9 dargestellt. Daraus ergibt sich, daß es sich bei dem Oberteil 14 des Deckels 13 um einen einstückigen, aus einem Kunststoff gefertigten Körper handelt, der einen erhabenen Mittelteil 17 aufweist, welcher zugleich als Handhabe für den Deckel 13 benutzbar ist. Die Fig. 3 zeigt, daß der erhabene Mittelteil 17 hohl gehalten ist. An den erhabenen Mittelteil 17 des Oberteils 14 schließt sich eine umlaufende Hohlkehle 18 an, die in einen ansteigenden, ebenfalls umlaufenden Bereich 19 übergeht, der in einem Rand 20 endet.

Wie aus der Fig. 2 der Zeichnung hervorgeht, ist der erhabene Mittelteil 17 in Draufsicht gesehen kreisförmig gestaltet. Der Mittelpunkt M dieses Kreises stimmt mit dem Mittelpunkt des Oberteiles überein. Auf diametral gegenüberliegenden Seiten und zwar in der Nähe des Randes des Oberteiles 14 liegend, sind Pfeile A eingezeichnet, die als Einsetzpfeil angesprochen werden können. Dies deshalb, weil einer der beiden Pfeile A im Bezug auf die Schnaupe 12 ausgerichtet wird, um dann den Deckel 13 mit dem Gehäuse 58 der Isolierkanne 10 lösbar verbunden werden zu können. Vom Pfeil A gehen jeweils zwei Winkel aus, nämlich einmal der kleinere Winkel $\alpha$, welcher der Ausgießöffnung des Deckels entspricht und daher auch an seinem Ende mit einem Tassensymbol gekennzeichnet ist. Auf der gegenüberliegenden anderen Seite ist der Winkel $\beta$ eingezeichnet, vergl. dazu die Fig. 2, der der Schließstellung des Deckels entspricht. Im gewählten Ausführungsbeispiel beträgt die Größe des Winkels $\alpha$ etwa 41°, die des Winkels $\beta$ dagegen etwa 72°.

Aus der Fig. 4 der Zeichnung ist erkennbar, daß der Oberteil 14 des Deckels 14 an der Unterseite der Hohlkehle 18 und des ansteigenden Bereiches 19 liegend mehrere umlaufende Leisten 21, 22 und 23 aufweist, die unterschiedliche Querschnittsgestalt und unterschiedliche Länge aufweisen. Der von den außenliegenden Leisten 21 und 23 eingeschlossene Raum dient der Unterbringung eines Randbereiches des generell mit 15 bezeichneten Unterteils des Deckels. Es handelt sich dabei um den Verbindungsbereich 55 des Unterteils. Dieser dient dazu, um mit dem Oberteil 14 fest verbunden, vorzugsweise verschweißt zu werden.

Auch der Unterteil 15 des Deckels 13 ist ein einstückiger, aus einem Kunststoff gefertigter Körper, der auf seiner dem Unterbringungsraum 54 des Gehäuses 58 der Isolierkanne 10 zugekehrten Seite eine generell mit 24 bezeichnete Verlängerung aufweist. Die Verlängerung 24 hat einen ebenen Mittelteil 25 und im Randbereich desselben liegend hochgezogene Wandungsteile 26, zwischen denen jeweils ein Auslaß 60 liegt. Die beiden Auslässe 60 befinden sich diametral gegenüber und sind im gewählten Ausführungsbeispiel untereinander gleichgestaltet. Im Bereich jedes Auslasses 60 geht der Mittelteil 25 in eine Abschrägung 28 über.

Die äußere Grundebene des Unterteiles 15 ist eben gehalten und mit 30 bezeichnet. Sie ist im wesentlichen kreisringförmig gestaltet. Zwischen ihr und der Unterseite der Verlängerung 24 ist eine umlaufende Nut 29 gebildet, in welche ein in der Fig. 6 in strichpunktierten Linien dargestellter Dichtungsring 61 eingesetzt wird. Dieser Dichtungsring liegt dabei mit seiner einen Fläche am Grund der umlaufenden Nut 29 an, während seine schräg gehaltene Außenfläche mit benachbarten Bereichen des Gehäuses der Kanne dichtend zusammenwirkt.

Unterhalb des ebenen Mittelteiles 25 des Unterteiles 15 ist ein Hohlraum 27 geschaffen. Die innere Grundebene des Unterteiles, die ringförmig gehalten ist, ist mit 31 bezeichnet, vergl. dazu die Fig. 9 der Zeichnung.

An der Umfangsfläche 46 des Unterteiles 15 sind Teile eines Bajonettverschlusses angeordnet. Auf diametral gegenüberliegenden Seiten ist jeweils ein solcher Teil eines Bajonettverschlusses zu finden, wie dies die Fig. 6 und 8 der Zeichnung veranschaulichen. Daraus ergibt sich, daß jeder dieser Teile des Bajonettverschlusses eine Einführungsöffnung 34 aufweist, die in Richtung auf die Verlängerung 24 hin offen ist und die auf der gegenüberliegenden anderen Seite in eine Schrägnut übergeht. Die Schrägnut setzt sich aus zwei Armen 35 bzw. 36 zusammen, die unterschiedlich lang gehalten sind. Dabei ist der Arm 35 der kürzere. Dieser ist der Ausgießöffnung des Deckels zugeordnet, der längere Arm 36 dagegen der Schließstellung des Deckels. Dies bedeutet, daß das am Behälter befindliche Gegenstück des Bajonettverschlusses vom Benutzer teilweise im Uhrzeigersinn oder entgegen diesem gedreht werden kann, wobei einmal der Deckel in seine Ausgießstellung und zum anderen in seine Schließstellung gelangt. Nachzutragen bleibt noch, daß in der äußeren Grundebene 30 des Unterteils 15 eine radial verlaufende Rinne 37 angeordnet ist, die mit ihrem einen Ende in die Einführungsöffnung 34 einmündet und mit ihrem anderen Ende bis zum Grund der Nut 29 reicht (vergl. Fig. 5).

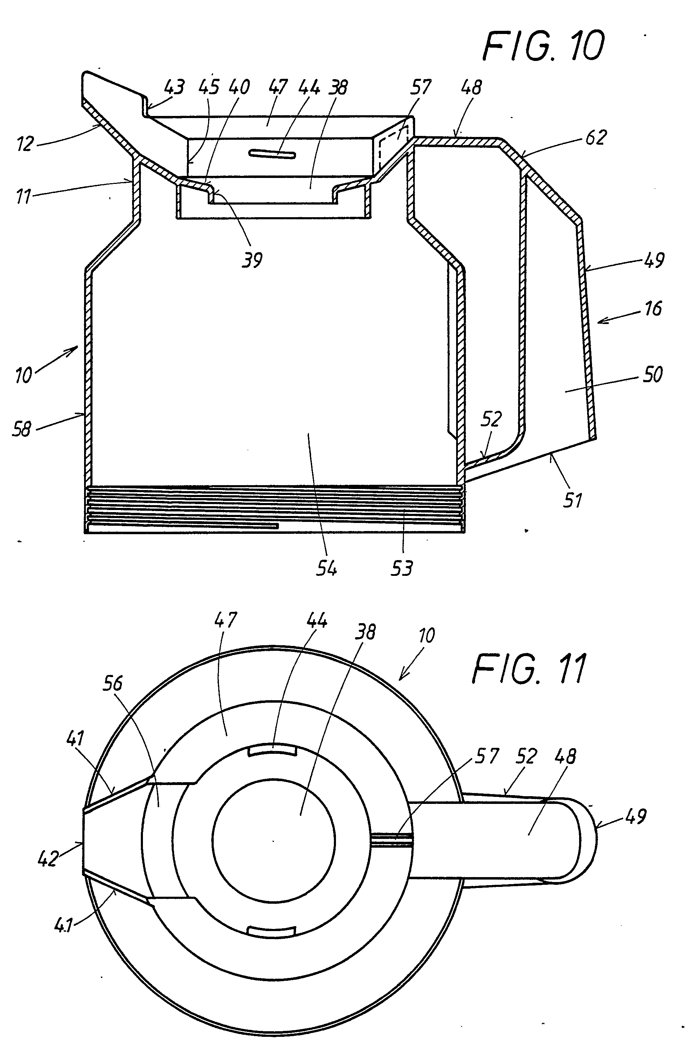

In den Fig. 10 und 11 der Zeichnung ist das einstückig aus einem Kunststoff gefertigte Gehäuse 58 der Isolierkanne 10 dargestellt. Daraus ergibt sich, daß es sich um ein Gehäuse handelt, das einen verhältnismäßig breiten Durchmesser aufweist. Das Gehäuse 58 ist nach unten hin offen. An der Innenwand des unteren Bereiches ist ein umlaufendes Gewinde 53 sichtbar, welches mit dem Gegengewinde des nicht dargestellten Bodens 59 zusammenwirkt. Dies bedeutet, daß der Boden in bekannter Weise in den unteren Bereich des Gehäuses 58 eingeschraubt bzw. entfernt werden kann. Durch die nach unten hin bei entferntem Boden freie Öffnung kann der Isolierbehälter in den Unterbringungsraum 54 des Gehäuses eingeschoben und danach der Boden 59 in seine wirksame Lage überführt werden.

In Höhe des eingezogenen oberen Gehäusebereiches 11 hat die Isolierkanne 10 eine in der Mitte liegende Füll- und Ausgießöffnung 38. Diese ist - wie die Fig. 11 zeigt - in Draufsicht gesehen kreisförmig gehalten. Die Füll- und Ausgießöffnung 38 wird von einer umlaufenden Begrenzungswand 39 umgeben. In diese greift nach dem Anbringen die Verlängerung 24 des Deckels 13.

Die Begrenzungswand 39 geht in eine nach außen hin ansteigende Fläche 40 über. Ein Teilbereich dieser ansteigenden Fläche 40 dient dem Zusammenwirken mit dem Dichtungsring 61, wenn der Deckel in seine wirksame Lage überführt wird. An die ansteigende Fläche 40 schließt sich eine aufrechte Wand 45 an, die auf diametral gegenüberliegenden Seiten jeweils einen schräg zur Horizontalen angeordneten, angeformten Vorsprung 44 aufweist. Die Länge dieses Vorsprunges 44 ist etwas kürzer gehalten als die der Einlaßöffnung 34 an der Umfangsfläche 46 des Unterteiles 15 des Deckels 13. Dies deshalb, weil der Vorsprung 44 jeweils den anderen Teil des Bajonettverschlusses bildet.

Am Ende der aufrechten Wand 45 ist eine obere Schrägfläche 47 angeordnet, die im Bereich der Schnaupe 12 eine Unterbrechung 56 aufweist. Der Steigungswinkel der Schrägfläche 47 des Gehäuses 58 entspricht im wesentlichen dem Winkel des ansteigenden Bereiches 19 des Oberteiles 14 des Deckels 13. Die Durchbrechung 56 bestimmt mit ihrer Breitenabmessung die innere Öffnung der Schnaupe 12. Denn - wie die Fig. 11 erkennen läßt - gehen von den Endbereichen der Unterbrechung 56 hochgezogene Seitenwandungen 41 der Schnaupe aus. Diese laufen aufeinander zu, bis sie in ihrem Endbereich schließlich die Ausgießöffnung 42 hinsichtlich ihrer Breite festlegen. Wie die Fig. 10 der Zeichnung am besten erkennen läßt, sind an den Enden der Seitenwände 41 der Schnaupe 12 Rücksprünge 43 vorgesehen. Nach dem Aufsetzen des Deckels 13 auf das Gehäuse 58 der Isolierkanne 10 liegen Bereiche des Randes des Oberteiles 14 des Deckels an den Rücksprüngen 43 an.

Wie die Fig. 10 der Zeichnung am besten erkennen läßt, ist dem Gehäuse 58 ein generell mit 16 bezeichneter Handgriff unmittelbar angeformt. Dieser Handgriff der Isolierkanne 10 setzt sich aus einem oberen und einem unteren Verbinder zusammen, die mit 48 bzw. 52 gekennzeichnet sind und die etwa horizontal verlaufen. Zwischen ihnen liegt ein vertikal angeordneter Mittelteil 49. Dieser Mittelteil 49 ist als nach unten hin offener Hohlkörper ausgebildet. Der Hohlraum ist mit 50 bezeichnet. Er hat eine untere Öffnung 51. Der Hohlraum verjüngt sich von der unteren Öffnung 51 aus in Richtung auf den oberen Verbinder 48. Nach oben hin ist der Hohlraum durch eine schräg verlaufende, obere Abschlußwand 62 verschlossen, die ihrerseits in den plattenförmig gestalteten oberen Verbinder 48 übergeht, der seinerseits in den Mantel des Gehäuses 58 übergeht.

Die Fig. 10 und 11 der Zeichnung zeigen, daß das Gehäuse 58 der Kanne 10 im Bereich seiner oberen Schrägfläche 47 liegend eine Nut 57 aufweist. Die Nut 57 ist der Schnaupe 12 gegenüberliegend und dem oberen Verbinder 58 des Handgriffes 16 benachbart. Die Nut 57 ist nach beiden Enden hin offen. Sie dient zur Unterbringung eines Haltefadens eines Aufgießbeutels für Tee od.dgl. Dabei ist daran gedacht, die Isolierkanne 10 auch zur Zubereitung von teeartigen Getränken zu benutzen, indem ein Aufgußbeutel in das im Inneren des Behälters befindliche heiße Wasser eingetaucht wird, während der Haltefaden mit Bereichen in die Nut 57 eingelegt wird. Auf diese Weise behindert er nicht das Anbringen oder Betätigen des Deckels 13 des Behälters 58.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Gestalt von Ober- und Unterteil des Deckels 13 und auch für das Aussehen des Gehäuses 58 der Isolierkanne 10. Abweichend vom dargestellten Ausführungsbeispiel kann auch die Verlängerung 24 des Deckels 13 ausgebildet sein. Dabei kann insbesondere die Breite der Auslässe der Verlängerung ebenso abgeändert werden wie die der hochstehenden Wandungen 46.

Bezugszeichenliste:

10 - Isolierkanne
11 - eingezogener oberer Gehäusebereich
12 - Schnaupe (Ausgießer)

13 - Deckel
14 - Oberteil (von 13)
15 - Unterteil (von 13)
16 - Handgriff (von 19)
17 - erhabener Mittelteil (von 13)
18 - Hohlkehle
19 - ansteigender Bereich
20 - Rand (von 19)
21 - umlaufende Leisten (an 13)
22 - umlaufende Leisten (an 13)
23 - umlaufende Leisten (an 13)
24 - Verlängerung (an 15)
25 - ebener Mittelteil
26 - hochgezogene Wandung (an 24)
27 - Hohlraum
28 - Abschrägung (von 25)
29 - umlaufende Nut
30 - äußere Grundebene (von 15)
31 - innere Grundebene (von 15)
32 - abgeschrägter Bereich (an 30)
33 - ansteigender Endteil (von 32)
34 - Einlaßöffnung
35 - kurzer Arm der Schrägnut
36 - langer Arm der Schrägnut
37 - Rinne
39 - Füllöffnung bzw. Ausgießöffnung
40 - ansteigende Fläche
41 - Seitenwand (von 12)
42 - Ausgießöffnung (von 12)
43 - Rücksprung (an 41)
44 - schräger Vorsprung (II. Teil eines Bajonettverschlusses)
45 - aufrechte Wand
46 - Umfangsfläche (von 15)
47 - obere Schrägfläche (von 10)
48 - oberer Verbinder (von 16)
49 - hohler Mittelteil (von 16)
50 - Hohlraum
51 - untere Öffnung (von 16)
52 - unterer Verbinder (von 16)
53 - Gewinde
54 - Unterbringungsraum (von 10)
55 - Verbindungsbereich (von 15)
56 - Unterbrechung (von 47)
57 - Nut
58 - Gehäuse (von 10)
59 - Boden (von 58)
60 - Auslaß
61 - Dichtungsring
62 - obere Abschlußwand (von 50)
M - Mittelpunkt
α - Öffnungswinkel - 41°
β - Schließwinkel - 72°
A - Einsatzpfeil

## Ansprüche

1. Kanne, insbesondere Isolierkanne zur Aufnahme von Heißgetränken, wie Kaffee, Tee od.dgl., deren Gehäuse in seinem oberen Bereich eine Schnaupe aufweist und deren Füll- und Ausgießöffnung ein Deckel zugeordnet ist, der über eine lösbare Verbindung, insbesondere über einen Bajonettverschluß mit dem Gehäuse der Kanne verbindbar ist und der in seiner Offenstellung zum Ausgießen nur einen Teilbereich der Füll- und Ausgießöffnung des Gehäuses der Kanne freigibt, **dadurch gekennzeichnet,** daß der Deckel (13) eine in die Füll- und Ausgießöffnung (38) des Gehäuses (58) der Isolierkanne (10) eingreifende Verlängerung (24) aufweist, die in Richtung zum Isolierkannenboden (59) hin offen ist und wenigstens einen in ihrer Umfangsfläche liegenden Auslaß (60) aufweist, der durch Drehen des Deckels (13) aus einer Schließlage in eine in Richtung der Schnaupe (12) weisende Öffnungslage überführbar ist.

2. Kanne nach Anspruch 1, dadurch gekennzeichnet, daß der obere Mittelteil (25) der Verlängerung (24) des Deckels (13) an seinem Rand eine hochgezogene Wandung (26) aufweist, die an wenigstens einer Stelle zur Bildung des Auslasses (40) eine Unterbrechung aufweist.

3. Kanne nach Anspruch 1 und 2, dadurch gekennzeichnet, daß der ebene Mittelteil (25) der Verlängerung (24) im Bereich des Auslasses (60) in eine Abschrägung (38) übergeht.

4. Kanne nach Anspruch 3, dadurch gekennzeichnet, daß an der äußeren Grundebene (30) des Deckels (13) im Randbereich liegend ein abgeschrägter Bereich (32) angeordnet ist, der der Abschrägung (38) des ebenen Mittelteiles (25) des Deckels (13) nachgeschaltet ist.

5. Kanne nach Anspruch 4, dadurch gekennzeichnet, daß der abgeschrägte Bereich (32) durch ansteigende Endteile (33) begrenzt ist, die in die äußere Grundebene (30) des Deckels (13) übergehen.

6. Kanne nach Anspruch 1, dadurch gekennzeichnet, daß die Verlängerung (24) des Deckels (13) zwei diametral gegenüberliegende und vorzugsweise untereinander gleichgestaltete Auslässe (60) aufweist.

7. Kanne nach einem oder mehreren der vorangehenden Ansprüche, dadurch gekennzeichnet, daß zwischen der Unterkante der Verlängerung (24) und der äußeren Grundebene (30) des Deckels (13) eine umlaufende Nut (29) zur Unterbringung eines Dichtungsringes (61) angeordnet ist.

8. Kanne nach einem oder mehreren der vorangehenden Ansprüche, dadurch gekennzeichnet, daß in der äußeren Grundebene (30) des Deckels (13) eine vorzugsweise radial verlaufende, der Entlüftung der Kanne dienende Rinne (37) angeordnet ist.

9. Kanne nach einem oder mehreren der vorangehenden Ansprüche, dadurch gekennzeichnet, daß die Verlängerung (24) an der äußeren Grundebene (30) eines Unterteiles (15) angeordnet ist, der mit einem Oberteil (14) zur Bildung eines kompletten Deckels (13) verbunden ist.

10. Kanne nach Anspruch 9, dadurch gekennzeichnet, daß der Unterteil (15) auf seiner der Verlängerung (24) abgekehrten Seite einen Verbindungsbereich (55) aufweist, der in einen durch Leisten (21, 22, 23) begrenzten Raum des Oberteils (14) eingreift und dort durch Schweißen, insbesondere Ultraschallschweißen, festgelegt ist.

11. Kanne nach Anspruch 1 und 9, dadurch gekennzeichnet, daß der einstückige Oberteil (14) des Deckels (13) einen erhabenen, zugleich als Handgriff benutzbaren Mittelteil (17) aufweist, an den sich eine umlaufende Hohlkehle (18) anschließt, die in einen ansteigenden, ebenfalls umlaufenden Bereich (19) übergeht, der in einem Rand (20) endet.

12. Kanne nach den Ansprüchen 1, 9 und 11, dadurch gekennzeichnet, daß der Rand (20) des oberteils (14) bereichsweise in Rücksprünge (43) eingreift, die an den inneren Enden noch hochstehenden Seitenwänden (41) der Schnaupe (12) der Kanne (10) gebildet sind.

13. Kanne nach Anspruch 12, dadurch gekennzeichnet, daß die Seitenwände (41) der Schnaupe (12) in Richtung der Umfangsfläche der Kanne (10) aufeinander zulaufen und mit ihren vorderen Enden die Ausgießöffnung (42) der Schnaupe (12) begrenzen.

14. Kanne nach einem oder mehreren der vorangehenden Ansprüche, dadurch gekennzeichnet, daß die Füll- und Ausgießöffnung (38) des Gehäuses (58) der Kanne (10) von einer umlaufenden Begrenzungswand (39) umgeben ist, die in eine nach außen hin ansteigenden Fläche (40) übergeht, an deren Ende eine aufrechte Wand (45) angeordnet ist, die auf diametral gegenüberliegenden Seiten jeweils einen den einen Teil eines Bajonettverschlusses bildenden, schräg zur Horizontalen angeordneten Vorsprung (44) aufweist und da sich an die Wand (45) eine obere Schrägfläche (47) anschließt, die im Bereich der Schnaupe (12) eine Unterbrechung (56) aufweist.

15. Kanne nach Anspruch 11 und 14, dadurch gekennzeichnet, daß der Steigungswinkel der Schrägfläche (47) des Gehäuses (58) etwa gleich ist dem Steigungswinkel des ansteigenden Bereiches (19) des Oberteiles (14) des Deckels (13).

16. Kanne nach einem oder mehreren der vorangehenden Ansprüche, dadurch gekennzeichnet, daß an der Umfangsfläche (46) des Unterteils (15) des Deckels (13) der zweite Teil eines Bajonettverschlusses angeordnet ist, der jeweils aus einer Einlaßöffnung (34) und einer sich daran anschliessenden Schrägnut (35, 36) besteht.

17. Kanne nach Anspruch 16, dadurch gekennzeichnet, daß die Schrägnut einen kürzeren (35), der Öffnungsstellung des Deckels (13) zugeordneten und einen längeren Arm (26) aufweist, welcher der Schließstellung des Deckels (13) zugeordnet ist.

18. Kanne nach Anspruch 16 und 17, dadurch gekennzeichnet, daß der Öffnungswinkel ($\alpha$) des Deckels (13) etwa 41° und der Schließwinkel ($\beta$) etwa 72° beträgt, jeweils von der Einsetzstelle (A) des Deckels (13) im Gehäuse (58) an gerechnet (Fig. 2).

19. Kanne nach Anspruch 1, deren Gehäuse einen Handgriff aufweist, dadurch gekennzeichnet, daß der Handgriff (16) der Kanne (10) einen oberen (48) und einen unteren, etwa horizontal verlaufenden Verbinder (52) aufweist, zwischen denen der etwa vertikal angeordnete Mittelteil (49) liegt.

20. Kanne nach Anspruch 19, dadurch gekennzeichnet, daß der Mittelteil (49) des Handgriffes (16) als nach unten hin offener Hohlkörper ausgebildet ist.

21. Kaqne nach Anspruch 20, dadurch gekennzeichnet, daß sich der Hohlraum (50) des Mittelteiles (49) des Handgriffes (16) von seiner unteren Öffnung (51) in Richtung auf den oberen vErbinder (48) vorzugsweise stetig verjüngt.

22. Kanne nach Anspruch 20 und 21, dadurch gekennzeichnet, daß der Hohlraum (50) des Mittelteiles (49) des Handgriffes (16) durch eine schräg verlaufende, obere Abschlußwand (62) verschlossen ist, die in den plattenförmigen oberen Verbinder (48) übergeht.

23. Kanne nach einem oder mehreren der vorangehenden Ansprüche, dadurch gekennzeichnet, daß das Gehäuse (58) der Kanne im bereich seiner oberen Schrägfläche (47) liegend eine Nut (57) zur Unterbringung von Teilen eines Haltefadens eines Teebeutels aufweist.

24. Kanne nach Anspruch 23, dadurch gekennzeichnet, daß die Nut (57) der Schnaupe (12) gegenüberliegend und dem oberen Verbinder (48) des Handgriffes (16) benachbart angeordnet und nach beiden Seiten hin offen ist.

EP 0 306 679 A2

FIG.1

FIG.2

FIG.3

FIG.4

Fa. Robert Krups Stiftung & Co. KG

FIG. 5

FIG. 6

FIG. 7

FIG. 8

FIG. 9

Fa. Robert Krups Stiftung & Co. KG

*FIG. 10*

*FIG. 11*

Fa. Robert Krups Stiftung & Co. KG